(19) Europäisches Patentamt / European Patent Office / Office européen des brevets

(11) **EP 3 940 088 B1**

(12) **EUROPEAN PATENT SPECIFICATION**

(45) Date of publication and mention
of the grant of the patent:
**22.11.2023 Bulletin 2023/47**

(21) Application number: **19919173.5**

(22) Date of filing: **17.12.2019**

(51) International Patent Classification (IPC):
**C21C 7/06** $^{(2006.01)}$     **C21C 7/076** $^{(2006.01)}$
**C21C 7/10** $^{(2006.01)}$     **C21C 7/00** $^{(2006.01)}$

(52) Cooperative Patent Classification (CPC):
**C21C 7/0006; C21C 7/06; C21C 7/076; C21C 7/10;**
Y02P 10/20

(86) International application number:
**PCT/JP2019/049447**

(87) International publication number:
**WO 2020/183841 (17.09.2020 Gazette 2020/38)**

(54) **METHOD FOR PRODUCING TI-CONTAINING ULTRALOW-CARBON STEEL**

VERFAHREN ZUR HERSTELLUNG VON TI-HALTIGEM STAHL MIT ULTRAGEKOHLTEM KOHLENSTOFF

PROCÉDÉ DE PRODUCTION D'ACIER AU TITANE À TENEUR ULTRA FAIBLE EN CARBONE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.03.2019 JP 2019045879**

(43) Date of publication of application:
**19.01.2022 Bulletin 2022/03**

(73) Proprietor: **JFE Steel Corporation**
**Tokyo 100-0011 (JP)**

(72) Inventors:
• **MURAI, Takeshi**
**Chiyoda-ku, Tokyo 100-0011 (JP)**
• **ITO, Toshiyuki**
**Chiyoda-ku,Tokyo 100-0011 (JP)**
• **NAKAMURA, Haruka**
**Chiyoda-ku, Tokyo 100-0011 (JP)**
• **MATSUDA, Kengo**
**Choyoda-ku, Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
**CN-A- 102 031 453     CN-B- 102 031 452**

**Description**

Technical Filed

This invention relates to a method for producing a Ti-containing ultralow-carbon steel at a high Ti yield in an RH vacuum degassing apparatus.

Background Art

A Ti-containing ultralow-carbon steel is typically produced by performing a rough decarburization treatment in a primary refining furnace such as converter or the like, tapping the steel into a ladle, performing a vacuum decarburization to an ultralow carbon level in an RH vacuum degassing apparatus, adding Al to conduct a deoxidation treatment, and adding a Ti source to the resulting molten steel.

Ti is an element having a strong oxidation power like Al. Moreover, since a Ti source is generally more expensive than an Al source, in the production of the Ti-containing steel, the molten steel in the ladle is deoxidized by adding Al, and after that, the Ti source is added, whereby the reaction of a dissolved oxygen with Ti is suppressed to secure a Ti yield.

Although the oxygen potential of the molten steel is decreased by the deoxidation treatment with Al, when slag containing a lower oxide such as FeO, MnO or the like and having a high oxygen potential is floating above the molten steel in the ladle, the reaction between Ti in the molten steel and the lower oxide in the slag, i.e. reoxidation reaction continues to progress and forms Ti into an oxide, resulting in a decrease in the Ti yield. To suppress the reoxidation reaction, therefore, there have been proposed many methods for controlling the slag composition.

As a countermeasure therefor, there has been adopted a method of subjecting the slag to reduction by adding a deoxidation agent (also called as a reducing agent) such as Al or the like to the slag in the ladle. For example, Patent Literature 1 discloses a method in which a deoxidation agent is added onto the slag floating on the molten steel in a non-deoxidation state immediately after tapping from a refining furnace to a ladle to reduce FeO in the slag to suppress reoxidation of Al.

Also, Patent Literature 2 discloses a method in which a deoxidation agent is added onto slag to suppress the reoxidation of Al and thereafter MgO source is also added to control the MgO concentration in the slag to not less than 13% to decrease the reactivity between molten steel ingredients and the slag, and increase a solid phase ratio in the slag and thus to decrease a fluidity of the slag.

Furthermore, Patent Literature 3 discloses a method in which a TiOz source is added to slag to control the TiOz concentration in the slag to not less than 5% in order to suppress the reaction between $SiO_2$ in the slag and Ti in molten steel. Patent Literature 4 and 5 further disclose a method for producing a Ti-containing carbon steel.

Citation List

Patent Literature

Patent Literature 1: JP-A-H02-30711
Patent Literature 2: JP-A-2015-183259
Patent Literature 3: JP-A-2001-355018
Patent Literature 4: CN 102 031 453 A
Patent Literature 5: CN 102 031 452 B

Summary of Invention

Technical Problem

In the above methods, however, the composition and amount of the slag are unclear at the addition of the material for controlling the slag composition, and thus the addition amount of the material cannot be determined or the slag composition after the addition may fall out of the desired range.

Moreover, even when the deoxidation agent is added to the slag to decrease the lower oxide as described in Patent Literature 1 or 2, as long as the process is conducted on the molten steel at non-deoxidized state, there is a problem the oxygen potential in the slag increases so as to be in equilibrium with the oxygen potential in the molten steel, that is, the lower oxide increases to become a reoxidation source after the deoxidation of the molten steel or it is necessary to add an excessive amount of the deoxidation agent to prevent such a phenomenon.

The method disclosed in Patent Literature 3 uses a VOD installation, where the lower oxide in the slag is subjected to reduction by the deoxidation of the molten steel with Al to reach an equilibrium concentration. However, the reaction between the slag and metal is slow in the RH vacuum degassing treatment, and practically, there is a problem that the lower oxide affecting the Ti yield remains or that Al needs to be added excessively to prevent such a phenomenon.

The invention is made in consideration of such circumstances, and an object thereof is to propose a method for preventing reoxidation of Ti in a molten steel in a ladle by slag and producing a Ti-containing ultralow-carbon steel stably at a high Ti yield.

Solution to Problem

The inventors have found that the reoxidation after the addition of Ti can be suppressed by charging a flux having a higher melting point and a lower density than those of the molten steel into a vacuum vessel of an RH vacuum degassing apparatus to block the molten steel and the slag using the flux, and hence the invention has been accomplished. The invention that advantageously solves the above task is a method for producing a Ti-containing ultralow-carbon steel having a carbon concentration of not more than 0.003 mass%, the method comprising tapping a molten steel having a carbon concentration of 0.02 to 0.06 mass% into a ladle at a non-deoxidation state from a converter, and then subjecting the molten steel to a vacuum decarburization treatment in an RH vacuum degassing apparatus to decrease the carbon concentration to not more than 0.003 mass%, characterized by, in refining of a molten steel using an RH vacuum degassing apparatus, performing a deoxidation treatment of the molten steel with Al subsequent to a vacuum decarburization treatment, then adding a flux having a melting point higher than the temperature of the molten steel into a vacuum vessel in the RH vacuum degassing apparatus, and subsequently adding a Ti source.

The method according to the present invention is defined in the claims.

Advantageous Effects of Invention

According to the invention, the molten steel and the slag are blocked by the flux, and the molten steel circulating time and the conveyance time from the completion of the RH treatment to the start of charging into the tundish is controlled, whereby the reoxidation of Ti in the molten steel by the slag is suppressed and the decrease in the Ti yield can be suppressed, leading to an industrial advantageous effect. The invention also has an advantage of reducing excessive use of the flux. Furthermore, the reoxidation of Ti in the molten steel by the slag can be suppressed by securing the time for the flux to float up.

Brief Description of Drawings

FIG. 1 is a schematic view illustrating an example of the apparatus used for carrying out the invention.
FIG. 2 is a graph showing an influence of a relation between a Ti concentration decreasing index $R_{Ti}$, which is calculated by the left side of the equation (1), and a Ti concentration decreasing ratio $\Delta_{Ti}$ in an actual operation upon a circulating time $t_3$ from an addition of a flux to an addition of a Ti source, when adopting the method according to the invention.

Description of Embodiments

In order to solve the problem, the inventors have considered as follows.

The reoxidation reaction of Ti in the molten steel by the slag is a reaction between a lower oxide in the slag and a deoxidation element in the molten steel. Accordingly, it has been considered that physically blocking the slag and the molten steel can prevent the reaction from proceeding. Thus, a flux that does not melt alone at the molten steel temperature and has a density lower than that of the molten steel is charged as a blocking material. That is, the flux is charged into the molten steel in the vacuum vessel of an RH vacuum degassing apparatus, where the flux passes through an immersion pipe of the RH vacuum degassing apparatus with the stream of the circulating molten steel and is dispersed into the molten steel in a ladle. As being low in the density as compared to the molten steel, the flux floats up in the molten steel and covers the side where the slag comes in contact with the molten steel on the surface in the ladle to block the molten steel and the slag. Also, when the flux is charged into the molten steel during a non-deoxidation treatment, a lower oxide is formed in a layer of the flux that has been charged so as to be equilibrium to oxygen potential in the molten steel, and therefore it is considered that the flux is enough to be charged after the molten steel is deoxidized with Al.

Even though the boundary surface between the molten steel and the slag is blocked by the flux, the reaction between the molten steel ingredients and the slag ingredients is caused by infiltration and diffusion after a lapse of a long time, and also the reaction is caused after a shorter time in the case where the molten steel is agitated, whereby the effect of suppressing reoxidation will be lowered.

At first, the behavior of a Ti concentration is investigated after Ti is added to the molten steel in the RH vacuum degassing apparatus during the production of an ultralow-carbon steel. As a comparison, an investigation is also conducted on the behavior of a Ti concentration after the molten steel and the slag are deoxidized at the tapping from the converter (hereinafter called as slag deoxidation), that is, after Ti is added to the circulating molten steel in the RH vacuum degassing apparatus with a smaller amount of the lower oxide in the slag.

As a result, the decreasing amount of the Ti concentration is largely increased in the production of an ultralow-carbon steel, as compared to the case where the slag is subjected to the deoxidation. Accordingly, MgO is added from the vacuum vessel after the deoxidation of the molten steel with Al in the production of an ultralow-carbon steel, and then Ti is added to examine the behavior of the Ti concentration, resulting that the decreasing amount of Ti concentration is largely reduced as compared to the case of adding no MgO.

Even when MgO is added, however, there is a large variation in the decreasing amount of the Ti concentration; in some cases, the decreasing amount of the Ti concentration is suppressed to the same extent as the case where the slag is subjected to deoxidation, while in other cases, the decreasing amount of the Ti concentration is not reduced so much. This variation may appear, in some cases, as a decrease in the Ti concentration at the completion of the RH treatment, and, in other cases, even when the Ti concentration at the completion of the RH treatment is at the same level as the case where the slag deoxidization treatment is conducted, it may appear as a decrease in the Ti concentration by the time the ladle holding the molten steel is transferred to the tundish and the molten steel is charged into the tundish after the RH treatment. This is considered to be influenced by a circulating treatment, conveyance and keeping time from the Ti addition in the RH treatment to the charging into the tundish, and hence the Ti concentration decreasing index $R_{Ti}$ with the lapse of time after the Ti addition is examined.

The result shows, although there is a variation, the decreasing amount of the Ti concentration tends to be larger as the time from the addition of Ti to the charging into the tundish is longer. Now, (1) the molten steel circulating time $t_1$ (s) in the RH vacuum degassing apparatus after the addition of Ti and (2) the conveyance time $t_2$ (s) from the end of the RH treatment to the start of charging the molten steel into the tundish for continuous casting are investigated separately. The Ti concentration decreasing index $R_{Ti}$ is represented by the following equation (2).

$$R_{Ti} = k_1 t_1 + k_2 t_2 \quad \dots (2),$$

where

    $k_1$ donates a reaction rate constant of a Ti oxidation reaction during the circulating of the molten steel, and
    $k_2$ donates a reaction rate constant of a Ti oxidation reaction during the conveyance from the completion of the RH treatment to the charging into the tundish.

< 1. Influence of molten steel circulating time >

The reaction between Ti in the molten steel and the slag during the molten steel circulating treatment in the RH vacuum degassing apparatus is considered to be intercorrelated to a stirring power applied to the molten steel. A stirring power density $\varepsilon$ (W/t) of the molten steel in the ladle during the molten steel circulating treatment in the RH vacuum degassing apparatus is represented by the following equation (3):

$$\varepsilon \propto U^2 \cdot Q / W_M \quad \dots (3),$$

where

    U donates a flow speed (m/s) of the molten steel in a descending-side immersion pipe of the RH vacuum degassing apparatus,
    Q donates a circulating rate (kg/s) of the molten steel, and
    $W_M$ donates a weight (kg) of the molten steel in the ladle.

The circulating rate Q (kg/s) of the molten steel generally uses the following equation (4):

$$Q \propto G^{1/3} \cdot d^{4/3} \cdot ( \ln ( P_0 / P ) )^{1/3} \quad .... (4),$$

where

G donates a flow rate ($Nm^3/s$) for a circulating gas after the addition of the Ti source in the RH vacuum degassing apparatus,
P donates a vacuum degree (Pa) in a vessel of the RH vacuum degassing apparatus after the addition of the Ti source,
$P_0$ donates an atmospheric pressure (101325 Pa), and
d donates an inner diameter (m) of an immersion pipe in the RH vacuum degassing apparatus.

The flow speed U (m/s) of the molten steel in the descending-side immersion pipe of the RH vacuum degassing apparatus is represented by the following equation (5) from the equation (4):

$$U = Q / ( ( \pi / 4 ) \cdot d^2 \cdot \rho_M ) \quad .... (5),$$

where
$\rho_M$ donates a density ($kg/m^3$) of the molten steel.

The following equation (6) is obtained by substituting the equations (4) and (5) in the equation (3):

$$\varepsilon \propto G \cdot \ln ( P_0 / P ) / W_M \quad .... (6).$$

Also, a mass transfer rate in the circulating of the molten steel is said to be proportional to 1/3 of the stirring power density, so that the reaction rate constant $k_1$ is determined by the following equation (7) from the equation (6):

$$k_1 \propto \varepsilon^{1/3} \propto ( G \cdot \ln ( P_0 / P) / W_M )^{1/3} \quad .... (7).$$

< 2. Influence of conveyance time >

The reaction rate between Ti in the molten steel and the slag during the conveyance time $t_2$ from the completion of the RH treatment to the charging into the tundish is considered to be inversely proportional to a thickness of a blocking layer between the molten steel and the slag, and the reaction rate constant $k_2$ during the conveyance is represented by the following equation (8):

$$k_2 \propto 1/L \quad .... (8),$$

where
L donates a thickness (m) of the blocking layer by a flux having a melting point higher than that of the molten steel.
The thickness of the blocking layer L is represented by the following equation (9):

$$L = W_f / \rho_f / ( \pi / 4 \cdot D^2 ) \quad .... (9),$$

where
$\rho_f$ donates an apparent density ($kg/m^3$) of the blocking layer.
Since $\rho_f$ is considered to be nearly constant when the flux is oxide, the following equation (10) is obtained by combining the equations (8) and (9):

$$k_2 \propto D^2 / W_f \quad .... (10).$$

< Decreasing amount of Ti >

The Ti concentration decreasing index $R_{Ti}$ is represented by the following equation (11), which is obtained by substituting the equations (7) and (10) in the equation (2):

$$R_{Ti} = A \left( G \cdot \ln \left( P_0 / P \right) / W_M \right)^{1/3} \cdot t_1 + B \left( D^2 / W_f \right) \cdot t_2 \quad .... (11),$$

where
A and B are constants.

In the equation (11), the constants A and B, and the Ti concentration decreasing index $R_{Ti}$ when the slag is subjected to deoxidation are calculated by performing a regression analysis of a condition where the Ti decreasing amount is larger than that when the slag is subjected to deoxidation by varying the operation conditions, treatment conditions, and the like. The result shows that A = 190, B = 11.8 and $R_{Ti}$ = 1800. That is, when the right side of the equation (11) is not more than 1800, the Ti decreasing amount is equal to that when the slag is subjected to deoxidation. Thus, the relation of the equation (1) is obtained.

$$190 \left( G \cdot \ln \left( P_0 / P \right) / W_M \right)^{1/3} \cdot t_1 + 11.8 \left( D^2 / W_f \right) \cdot t_2 \leq 1800 \quad ....$$

$$(1)$$

In the production of a Ti-containing ultralow-carbon steel with an RH vacuum degassing apparatus, therefore, the molten steel is subjected to a deoxidation treatment with Al subsequent to a vacuum decarburization treatment, and then a flux having a melting point higher than that of the molten steel is added to the vacuum vessel of the RH vacuum degassing apparatus, and thereafter a Ti source is added, whereby the Ti decreasing amount by oxidation can be reduced and the Ti-containing ultralow-carbon steel can be produced. Also, it is preferable that, after a given amount of the flux is added, the molten steel circulating time $t_1$ in the RH treatment after the addition of Ti and the conveyance time $t_2$ from the completion of the RH treatment to the start of charging the molten steel into the tundish for continuous casting are adjusted so as to satisfy the equation (1), whereby the Ti decreasing amount by oxidation can be made equal to that in the slag deoxidation. Furthermore, it is more preferable that the molten steel circulating time $t_1$ and the conveyance time $t_2$ are previously determined and the flux is added in an amount $W_f$ satisfying the equation (1), the used amount of the flux can be minimized. For example, for the ladle of 300 tons, the molten steel circulating time $t_1$ is usually about 180 to 480 seconds and the conveyance time $t_2$ is, although it depends on the arrangement of the installation and the operation conditions, about 1200 to 3600 seconds. When the circulating time is too short, the Ti concentration may become non-uniform, while when the circulating time is too long, erosion of refractories, increase in the Ti decreasing amount and lowering of molten steel temperature are concerned. The lower limit of the conveyance time is dependent on the arrangement of the installation; when the conveyance time is too long, an increase in the Ti decreasing amount and the lowering of the molten steel temperature are concerned. The flux is preferably added to have a thickness of at least 3 mm such that the blocking layer is not broken even by stirring during the circulating of the molten steel. When the flux is added exceeding the thickness of 30 mm, the effect of blocking the Ti oxidation is saturated. Therefore, the thickness L of the flux forming the blocking layer preferably falls within the range of 3 to 30 mm, more preferably the range of 5 to 10 mm. Accordingly, the addition amount of the flux is, depending on the diameter of the ladle, preferably within the range of 0.3 to 3.0 kg, further preferably the range of 0.4 to 1.0 kg per 1 ton of the molten steel.

< Securement of flux floating-up time >

When the Ti source is added immediately after the given amount of the flux is added, Ti, which has been added and dissolved into the molten steel, may react with the lower oxide in the slag before the flux floats up in the molten steel in the ladle and blocks the boundary surface between the molten steel and the slag. Therefore, the inventors have conceived to secure a time for the flux to float up before the addition of the Ti source.

A floating-up speed of particles having a density smaller than that of liquid is a sum of a flow speed $U_u$ (m/s) of the liquid in the upward and downward directions and an end speed $u_p$ (m/s) of particles in a static bath. The end speed $u_p$ of particles is usually represented by the following equation (D):

$$u_p = \left( 4 / 3 \cdot d_p / C_D \cdot \left| \rho_p - \rho_M \right| / \rho_M \right)^{1/2} \quad .... (D),$$

where

$\rho_p$ donates a density (kg/m$^3$) of the flux,

$\rho_M$ donates a density (kg/m$^3$) of the molten steel, and
$d_p$ donates an average particle size (m) of the flux.

In the equation (D), $C_D$ is called as a drag coefficient and depends on Reynolds (Re) number. The Re number (2 to 500) related to the movement of flux particles in the molten steel in the ladle during the RH treatment as a target of the invention is represented by $C_D = 10 / Re^{1/2}$ by Allen's formula. Here, the Reynolds number Re is $d_p \cdot u_p \cdot \rho_M/\mu_M$. The end speed $u_p$ of the particles is the following equation (B) based on Allen's formula:

$$u_p = ( 4 \cdot ( \rho_p - \rho_M )^2 \cdot g^2 / ( 225\rho_M \cdot \mu_M ) )^{1/3} \cdot d_p \quad .... \text{(B)},$$

where

g donates gravity acceleration (9.8 m/s$^2$), and
$\mu_M$ donates a viscosity (Pa $\cdot$ s) of the molten steel.

In the ladle, the molten steel circulating in the RH vacuum degassing apparatus is considered to be a descending stream just beneath the immersion pipe at the descending side of the molten steel, while it is a rising stream at a region other than the former, so that an average rising speed $U_u$ of the area is represented by the following equation (C):

$$U_u = Q / \rho_M / ( S - \pi / 4 \cdot d_i^2 ) \quad .... \text{(C)},$$

where

Q donates a circulating rate (kg/s) of the molten steel,
S donates an area (m$^2$) at a position of a molten surface in the ladle, and
$d_i$ donates a diameter (m) of the immersion pipe.

When it is considered that the flux added to the molten steel in the RH vacuum vessel flows with the circulating stream, once arrives at the bottom of the ladle and rises therefrom with the rising stream of the rate $U_u$ (m/s), a time $t_u$ (s) required for the flux particles to rise from the bottom of the ladle to the boundary surface between the molten steel and the slag is represented by the following equation (E):

$$t_u = H / ( u_p + U_u ) \quad .... \text{(E)},$$

where
the depth of the molten steel in the ladle is H (m).

Since the boundary surface between the slag and the molten steel can be sufficiently blocked by the flux after the rising time $t_u$, it is considered that the reaction between Ti and the lower oxide in the slag can be suppressed by adding the Ti source after at least $t_u$ from the addition of the flux. Therefore, a time $t_3$ from the addition of flux to the start of adding the Ti source is preferable to satisfy the following equation (A):

$$t_3 > H / ( u_p + U_u ) \quad .... \text{(A)}$$

When the circulating time $t_3$ from the addition of the flux to the addition of the Ti source in the RH vacuum degassing apparatus is too long, the influence on the suppression of the decrease in Ti due to the reoxidation is saturated, and the treatment cost is increased. Moreover, the upper limit of $t_3$ depends on the addition amount of the flux and the size of the apparatus, but is preferably about 60 seconds.

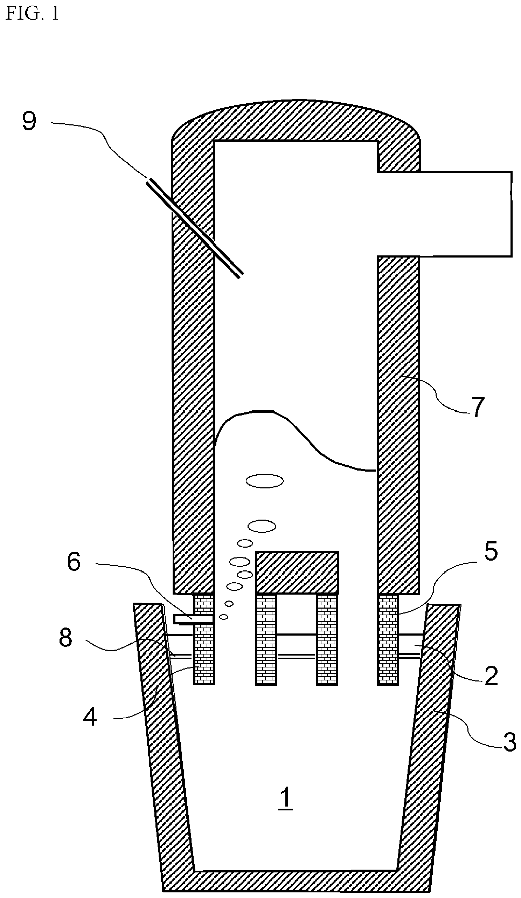

The method according to the invention will be described below with reference to FIG. 1, which is a schematic view of a preferable embodiment according to the invention.

A molten steel 1 and slag 2, which are obtained by decarburization refining in a converter, are tapped into a ladle 3. The molten steel 1 is at a non-deoxidation state, and it is desirable to add an Al-containing slag modifier onto the slag 2 that covers the molten steel 1 in the ladle 3. It is not necessary to use a special facility for the addition as long as the Al-containing slag modifier can be added dispersedly onto the slag 2.

Thereafter, the ladle 3 is conveyed to an RH vacuum degassing apparatus and raised by an elevating device (not shown) to immerse a rising-side immersion pipe 4 and a descending-side immersion pipe 5 into the molten steel 1 in the ladle 3. The Ar gas is blown into the rising-side immersion pipe 4 from an Ar gas blowing pipe 6, while an interior of a vacuum vessel 7 is exhausted by an exhaust device (not shown) to depressurize the interior of the vacuum vessel 7. As the interior of the vacuum vessel 7 is depressurized, the molten steel 1 in the ladle 3 moves upward in the rising-side immersion pipe 4 together with the Ar gas blown from the Ar blowing pipe 6, flowed into the vacuum vessel 7, and thereafter returned to the ladle 3 through the descending-side immersion pipe 5, which is a so-called circulating stream, is formed to perform a RH vacuum degassing refining.

At the non-deoxidation state of the molten steel, decarburization reaction is advanced by the RH vacuum degassing refining. After the decarburization is completed, the concentration of the dissolved oxygen in the molten steel is measured and a metallic Al having an amount and a chemical composition required for deoxidizing the oxygen is added to the molten steel in the vacuum vessel 7 from a charging shoot 9 to deoxidize the molten steel 1. Thereafter, a flux is added to the molten steel in the vacuum vessel 7 from the charging shoot 9 to form a blocking layer 8 of the flux between the molten steel 1 and the slag 2. The flux, being used for blocking the molten steel and the slag to prevent Ti and Al in the steel from being oxidized, is an oxide of an element having a deoxidation force equal to that of Al or Ti and is necessary not to melt at the molten steel temperature. For example, the oxide includes $Al_2O_3$, MgO, and CaO as an example, and can also use a compound comprised mainly thereof such as bauxite, quicklime, magnesia brick waste, dolomite or the like.

Next, a given amount of a Ti source is added to the molten steel in the vacuum vessel 7 from the charging shoot 9 after the lapse of time $t_3$ preferably satisfying the equation (A), and the RH circulating time $t_1$ and the conveyance time $t_2$ up to the charging into the tundish are adjusted so as to satisfy the equation (1). The RH circulating time $t_1$ is preferable to be shorter, but it is desirable to previously measure the time required for the added Ti to be uniformly mixed with the molten steel and secure $t_1$ longer than the time. Example

A molten steel of about 300 tons having a carbon concentration of 0.02 to 0.06 mass% is tapped from a converter into a ladle with an inner diameter of 3.2 m at a non-deoxidation state and subjected to a vacuum decarburization treatment in an RH vacuum degassing apparatus after the tapping to decrease the carbon concentration to not more than 0.003 mass%. After the decarburization, a metallic Al is added in an amount corresponding to a dissolved oxygen concentration in the molten steel, and then a given amount of MgO is added to the molten steel in a vacuum vessel. After the lapse of time $t_3$ (s), a metallic Ti is added into the vacuum vessel. After the addition, a circulating treatment is conducted in the RH vacuum degassing apparatus, and the ladle is conveyed to a tundish for continuous casting to start charging the molten steel. In this case, the circulating time $t_1$ of the molten steel after the addition of Ti in the RH vacuum degassing apparatus and the conveyance time $t_2$ to the tundish are varied. At the stage when approximately a half of the molten steel in the ladle is charged into the tundish, a sample for the molten steel in the tundish is taken out and analyzed. As a comparison, another analysis is also conducted on the case where Ti is added to the molten steel in the vacuum vessel without adding MgO.

Table 1 shows the treatment conditions and the results. A decreasing amount ratio $\Delta_{Ti}$ of the Ti concentration in the treatment conditions Nos. 1 to 25 is evaluated by a ratio to the decreasing amount of the Ti concentration in the treatment condition Nos. 26 to 30, as a comparative examples, where Ti is added to the molten steel in the vacuum vessel without adding MgO.

Table 1

| No. | Addition amount $W_f$ (kg) of MgO | Addition amount (kg) of metallic Ti | RH treatment condition | | | | | Time $t_2$(s) from completion of RH treatment to start of charging into tundish | Left side of equation (1) | | | Ti decreasing amount ratio $\Delta_{Ti}(-)$ | Remarks |
|---|---|---|---|---|---|---|---|---|---|---|---|---|---|
| | | | Flow rate G (Nm³/s) of circulating gas | Vacuum degree P (Pa) in vessel | Time $t_3$ (s) from MgO addition to Ti addition | Right side of equation (A) | Circulating time ti(s) in RH after Ti addition | | Clause 1 | Clause 2 | Total $R_{Ti}$ | | |
| 1 | 200 | 161 | 0.033 | 160.0 | 20 | 31.2 | 360 | 2160 | 612.1 | 1305.0 | 1917.1 | 0.86 | Invention Example |
| 2 | 100 | 155 | 0.042 | 213.3 | 22 | 30.7 | 180 | 1320 | 324.7 | 1595.0 | 1919.7 | 0.82 | Invention Example |
| 3 | 300 | 152 | 0.033 | 240.0 | 21 | 31.3 | 360 | 3300 | 599.0 | 1329.2 | 1928.2 | 0.83 | Invention Example |
| 4 | 300 | 247 | 0.042 | 213.3 | 25 | 30.7 | 420 | 2760 | 757.7 | 1111.7 | 1869.4 | 0.80 | Invention Example |
| 5 | 200 | 249 | 0.042 | 173.3 | 15 | 30.6 | 300 | 2160 | 547.2 | 1305.0 | 1852.2 | 0.79 | Invention Example |
| 6 | 250 | 147 | 0.050 | 146.7 | 14 | 30.1 | 300 | 2820 | 586.6 | 1363.0 | 1949.5 | 0.88 | Invention Example |
| 7 | 150 | 160 | 0.050 | 240.0 | 38 | 30.3 | 180 | 1860 | 342.9 | 1498.3 | 1841.2 | 0.75 | Invention Example |
| 8 | 200 | 155 | 0.033 | 226.6 | 36 | 31.3 | 420 | 2040 | 701.1 | 1232.5 | 1933.6 | 0.81 | Invention Example |
| 9 | 250 | 160 | 0.042 | 120.0 | 35 | 30.5 | 300 | 2940 | 557.6 | 1421.0 | 1978.5 | 0.84 | Invention Example |
| 10 | 250 | 156 | 0.050 | 213.3 | 40 | 30.3 | 360 | 2640 | 690.2 | 1276.0 | 1966.1 | 0.78 | Invention Example |
| 11 | 250 | 148 | 0.042 | 173.3 | 25 | 30.6 | 360 | 2160 | 656.7 | 1044.0 | 1700.7 | 0.72 | Invention Example |
| 12 | 120 | 163 | 0.033 | 226.6 | 25 | 31.3 | 180 | 1440 | 300.5 | 1450.0 | 1750.4 | 0.71 | Invention Example |

(continued)

| No. | RH treatment condition | | | | | | | Time $t_2$(s) from completion of RH treatment to start of charging into tundish | Left side of equation (1) | | | Ti decreasing amount ratio $\Delta_{Ti}$(-) | Remarks |
|---|---|---|---|---|---|---|---|---|---|---|---|---|---|
| | Addition amount $W_f$ (kg) of MgO | Addition amount (kg) of metallic Ti | Flow rate G (Nm³/s) of circulating gas | Vacuum degree P (Pa) in vessel | Time $t_3$ (s) from MgO addition to Ti addition | Right side of equation (A) | Circulating time ti (s) in RH after Ti addition | | Clause 1 | Clause 2 | Total $R_{Ti}$ | | |
| 13 | 300 | 151 | 0.033 | 133.3 | 17 | 31.1 | 420 | 2400 | 720.8 | 966.7 | 1687.5 | 0.70 | Invention Example |
| 14 | 300 | 254 | 0.042 | 173.3 | 20 | 30.6 | 240 | 3060 | 437.8 | 1232.5 | 1670.3 | 0.69 | Invention Example |
| 15 | 200 | 248 | 0.033 | 133.3 | 26 | 31.1 | 360 | 1740 | 617.9 | 1051.2 | 1669.1 | 0.65 | Invention Example |
| 16 | 300 | 252 | 0.042 | 240.0 | 25 | 30.8 | 420 | 2220 | 752.8 | 894.2 | 1647.0 | 0.65 | Invention Example |
| 17 | 300 | 241 | 0.050 | 173.3 | 21 | 30.2 | 360 | 2520 | 697.8 | 1015.0 | 1712.8 | 0.67 | Invention Example |
| 18 | 250 | 246 | 0.033 | 200.0 | 36 | 31.3 | 420 | 2100 | 705.8 | 1015.0 | 1720.8 | 0.67 | Invention Example |
| 19 | 200 | 150 | 0.042 | 120.0 | 37 | 30.5 | 300 | 1860 | 557.6 | 1123.7 | 1681.3 | 0.63 | Invention Example |
| 20 | 250 | 149 | 0.050 | 160.0 | 35 | 30.1 | 360 | 2100 | 700.7 | 1015.0 | 1715.7 | 0.65 | Invention Example |
| 21 | 250 | 148 | 0.050 | 186.7 | 37 | 30.2 | 300 | 2280 | 579.2 | 1102.0 | 1681.2 | 0.64 | Invention Example |
| 22 | 200 | 249 | 0.042 | 160.0 | 41 | 30.6 | 360 | 1800 | 659.4 | 1087.5 | 1746.9 | 0.67 | Invention Example |
| 23 | 300 | 149 | 0.033 | 160.0 | 39 | 31.2 | 360 | 2640 | 612.1 | 1063.3 | 1675.5 | 0.61 | Invention Example |
| 24 | 150 | 158 | 0.042 | 226.6 | 36 | 30.8 | 240 | 1500 | 431.5 | 1208.3 | 1639.9 | 0.61 | Invention Example |

| No. | Addition amount $W_f$ (kg) of MgO | Addition amount (kg) of metallic Ti | Flow rate G (Nm³/s) of circulating gas | Vacuum degree P (Pa) in ves-sel | Time $t_3$ (s) from MgO addition to Ti addition | Right side of equation (A) | Circulating time ti(s) in RH after Ti addi-tion | Time $t_2$(s) from comple-tion of RH treatment to start of charg-ing into tundish | Clause 1 | Clause 2 | Total $R_{Ti}$ | Ti decreasing amount ratio $\Delta_{Ti}$(-) | Remarks |
|---|---|---|---|---|---|---|---|---|---|---|---|---|---|
| | | | RH treatment condition | | | | | | Left side of equation (1) | | | | |
| 25 | 250 | 147 | 0.042 | 200.0 | 33 | 30.7 | 420 | 1980 | 760.3 | 957.0 | 1717.3 | 0.60 | Invention Example |
| 26 | 0 | 150 | 0.042 | 186.7 | - | 30.7 | 330 | 1920 | 599.6 | - | - | 0.96 | Comparative Example |
| 27 | 0 | 244 | 0.042 | 173.3 | - | 30.6 | 300 | 1980 | 547.2 | - | - | 1.07 | Comparative Example |
| 28 | 0 | 246 | 0.033 | 213.3 | - | 30.7 | 360 | 1920 | 600.9 | - | - | 1.05 | Comparative Example |
| 29 | 0 | 148 | 0.033 | 120.0 | - | 30.5 | 300 | 1920 | 515.9 | - | - | 0.95 | Comparative Example |
| 30 | 0 | 155 | 0.042 | 186.7 | - | 30.7 | 360 | 1920 | 654.1 | - | - | 0.99 | Comparative Example |

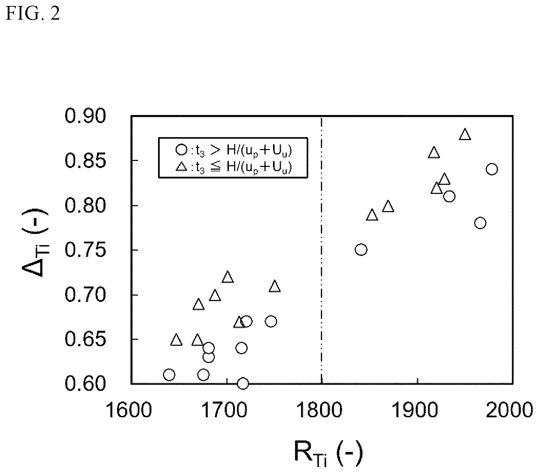

As shown in Table 1, the treatment condition Nos. 1 to 25 are cases where MgO is added to the molten steel in the vacuum vessel, and the decrease in the Ti concentration can be suppressed as compared to the treatment conditions Nos. 26 to 30 where MgO is not added to the molten steel in the vacuum vessel. In the treatment condition Nos. 11 to 25 where MgO is added to the molten steel in the vacuum vessel and the treatment is performed with the circulating time of the molten steel, conveyance time and the addition amount of the flux satisfying the equation (1), the decrease in the Ti concentration can be further suppressed. In the treatment condition Nos. 1 to 25 of Table 1, the Ti concentration decreasing index $R_{Ti}$ calculated in the left side of the equation (1) is plotted in an abscissa axis and the decreasing amount ratio $\Delta_{Ti}$ in an actual operation is plotted in a vertical axis to show a relation between $R_{Ti}$ and $\Delta_{Ti}$ in FIG. 2. It can be seen that $R_{Ti}$ and $\Delta_{Ti}$ are well intercorrelated with each other. Also, the condition of the time $t_3$ that satisfies the equation (A) is shown by a symbol o and the condition that does not satisfy the equation (A) is shown by $\triangle$. It can be seen that, even when the Ti concentration decreasing index $R_{Ti}$ is the same, the decreasing amount ratio $\Delta_{Ti}$ can be more decreased in the condition satisfying the equation (A).

Industrial Applicability

According to the invention, the Ti decreasing amount due to the oxidation with the slag can be suppressed by forming the blocking layer between the molten steel and the slag. This technique is applicable to steel grades required for suppressing slag-metal reaction other than the production of the Ti-containing steel.

Reference Signs List

1    molten steel
2    slag
3    ladle
4    rising-side immersion pipe
5    descending-side immersion pipe
6    Ar gas blowing pipe
7    vacuum vessel
8    blocking layer
9    charging shoot

**Claims**

1.  A method for producing a Ti-containing ultralow-carbon steel having a carbon concentration of not more than 0.003 mass%, the method comprising tapping a molten steel having a carbon concentration of 0.02 to 0.06 mass% into a ladle at a non-deoxidation state from a converter, and then subjecting the molten steel to a vacuum decarburization treatment in an RH vacuum degassing apparatus to decrease the carbon concentration to not more than 0.003 mass%,
    **characterized in that**,

    in a method for refining a molten steel (1) using an RH vacuum degassing apparatus,
    a deoxidation treatment of the molten steel is performed with Al subsequent to a vacuum decarburization treatment,
    after the deoxidation treatment, a flux having a melting point higher than the temperature of the molten steel is added into a vacuum vessel (7) in the RH vacuum degassing apparatus and subsequently
    a Ti source is added.

2.  The method according to claim 1, wherein,

    after the addition of the given amount of the flux, a molten steel circulating time $t_1$ after the Ti source is added to the RH vacuum degassing apparatus, and a conveyance time $t_2$ from the completion of the RH treatment to the start of charging the molten steel into a tundish for continuous casting are adjusted so as to satisfy the following equation (1):

$$190 \left( G \cdot \ln \left( P_0 / P \right) / W_M \right)^{1/3} \cdot t_1 + 11.8 \left( D^2 / W_f \right) \cdot t_2 \leq 1800 \quad \ldots (1),$$

where $t_1$ donates a circulating time (s) after the addition of the Ti source in the RH vacuum degassing apparatus, G donates a flow rate ($Nm^3/s$) of a circulating gas after the addition of the Ti source in the RH vacuum degassing apparatus, P donates a vacuum degree (Pa) in the vessel (7) after the addition of the Ti source in the RH vacuum degassing apparatus, $P_0$ donates an atmospheric pressure (101325 Pa), $W_M$ donates a weight (kg) of the molten steel, $t_2$ donates a conveyance time (s) from the completion of the RH treatment to the start of charging the molten steel into the tundish, D donates a diameter (m) of the molten steel surface in a ladle (3), and $W_f$ donates an addition amount (kg) of the flux having a melting point higher than the molten steel temperature

3. The method according to claim 2, wherein
the molten steel circulating time $t_1$ and the conveyance time $t_2$ are determined in advance, and the addition amount $W_f$ of the flux is calculated so as to satisfy the equation (1) and added.

4. The method according to any one of claims 1 to 3, wherein

a time $t_3$ after the addition of a given amount of the flux to the start of the addition of the Ti source satisfies the following equations (A) to (C):

$$t_3 > H / \left( u_p + U_u \right) \ldots (A)$$

$$u_p = \left( 4 \cdot \left( \rho_p - \rho_M \right)^2 \cdot g^2 / \left( 225 \rho_M \cdot \mu_M \right) \right)^{1/3} \cdot d_p \ldots (B)$$

$$U_u = Q / \rho_M / \left( S - \pi/4 \cdot d_i^2 \right) \quad \ldots (C),$$

where $t_3$ donates a circulating time (s) from the addition of the flux to the addition of the Ti source in the RH vacuum degassing apparatus, H donates a depth (m) of the molten steel in the ladle (3), $u_p$ donates an end speed (m/s) of flux grains in the molten steel, $U_u$ donates an average rising speed (m/s) of the molten steel in the ladle, $\rho_p$ donates a flux density ($kg/m^3$), $\rho_M$ donates a molten steel density ($kg/m^3$), g donates a gravity acceleration (9.8 $m/s^2$), $\mu_M$ donates a viscosity (Pa $\cdot$ s) of the molten steel, $d_p$ donates an average grain size (m) of the flux, Q donates a circulating rate (kg/s) of the molten steel, S donates an area ($m^2$) at a position of the molten steel surface in the ladle, and $d_i$ donates a diameter (m) of an immersion pipe (4, 5).

**Patentansprüche**

1. Verfahren zur Herstellung eines Ti-haltigen Stahl mit extrem niedrigem Kohlenstoffgehalt, der eine Kohlenstoffkonzentration von nicht mehr als 0,003 Masse-% aufweist, wobei das Verfahren das Abstechen einer Stahlschmelze mit einer Kohlenstoffkonzentration von 0,02 bis 0,06 Masse-% in eine Pfanne in einem nicht-desoxidierten Zustand aus einem Konverter und dann das Unterziehen der Stahlschmelze einer Vakuum-Entkohlungsbehandlung in einer RH-Vakuumentgasungsvorrichtung zur Verringerung der Kohlenstoffkonzentration auf nicht mehr als 0,003 Masse-% umfasst,
**dadurch gekennzeichnet, dass**

in dem Verfahren zum Frischen einer Stahlschmelze (1) unter Verwendung einer RH-Vakuumentgasungsvorrichtung,
eine Desoxidationsbehandlung der Stahlschmelze mit Al im Anschluss an eine Vakuum-Entkohlungsbehandlung durchgeführt wird,
nach der Desoxidationsbehandlung ein Flussmittel mit einem Schmelzpunkt, der höher als die Temperatur der Stahlschmelze ist, in einen Vakuumbehälter (7) in der RH-Vakuumentgasungsvorrichtung gegeben wird und anschließend
eine Ti-Quelle hinzugefügt wird.

2. Verfahren gemäß Anspruch 1, worin

nach der Zugabe einer bestimmten Menge des Flussmittels eine Stahlschmelze-Zirkulationsdauer $t_1$, nachdem die Ti-Quelle der RH-Vakuumentgasungsvorrichtung hinzugefügt wurde, und eine Überführungsdauer $t_2$ vom Abschluss der RH-Behandlung bis zum Beginn des Einfüllens der Stahlschmelze in einen Verteiler zum Stranggießen so eingestellt werden, dass sie die folgende Gleichung (1) erfüllen:

$$190(G \cdot In(P_0/P)/W_M)^{1/3} \cdot t_1 + 11,8(D^2/W_f) \cdot t_2 \leq 1.800 \qquad \ldots(1),$$

worin $t_1$ eine Zirkulationsdauer (s) nach der Zugabe der Ti-Quelle in der RH-Vakuumentgasungsvorrichtung liefert, G eine Durchflussrate ($Nm^3/s$) eines zirkulierenden Gases nach der Zugabe der Ti-Quelle in der RH-Vakuumentgasungsvorrichtung liefert, P einen Vakuumgrad (Pa) in dem Behälter (7) nach der Zugabe der Ti-Quelle in der RH-Vakuumentgasungsvorrichtung liefert, $P_0$ einen Atmosphärendruck (101325 Pa) liefert, $W_M$ ein Gewicht (kg) der Stahlschmelze liefert, $t_2$ eine Überführungsdauer (s) vom Abschluss der RH-Behandlung bis zum Beginn des Einfüllens der Stahlschmelze in den Verteiler liefert, D einen Durchmesser (m) der Stahlschmelzenoberfläche in einer Pfanne (3) liefert und $W_f$ eine Zugabemenge (kg) des Flussmittels mit einem höheren Schmelzpunkt als die Temperatur der Stahlschmelze liefert.

**3.** Verfahren gemäß Anspruch 2, worin
die Stahlschmelze-Zirkulationsdauer $t_1$ und die Überführungsdauer $t_2$ im Voraus bestimmt werden und die Zugabemenge $W_f$ des Flussmittels so berechnet wird, dass sie die Gleichung (1) erfüllt, und hinzugefügt wird.

**4.** Verfahren gemäß einem der Ansprüche 1 bis 3, worin

eine Zeit $t_3$ nach der Zugabe einer bestimmten Menge des Flussmittels bis zum Beginn der Zugabe der Ti-Quelle die folgenden Gleichungen (A) bis (C) erfüllen:

$$t_3 > H/(u_p + U_u) \qquad \ldots(A)$$

$$u_p = (4 \cdot (\rho_p - \rho_M)^2 \cdot g^2/(225\ \rho_M \cdot \mu_M))^{1/3} \cdot d_p \qquad \ldots(B)$$

$$U_u = Q/\rho_M/(S - /4 \cdot d_i^2) \qquad \ldots(C),$$

worin $t_3$ eine Zirkulationsdauer (s) von der Zugabe des Flussmittels bis zur Zugabe der Ti-Quelle in der RH-Vakuumentgasungsvorrichtung liefert, H eine Tiefe (m) der Stahlschmelze in der Pfanne (3) liefert, $u_p$ eine Endgeschwindigkeit (m/s) der Flussmittelkörner in der Stahlschmelze liefert, $U_u$ eine durchschnittliche Anstiegsgeschwindigkeit (m/s) der Stahlschmelze in der Pfanne liefert, $\rho_p$ eine Flussmitteldichte ($kg/m^3$) liefert, $\rho_M$ eine Dichte der Stahlschmelze ($kg/m^3$) liefert, g eine Gravitationsbeschleunigung liefert (9,8 $m/s^2$), $\cdot\mu_M$ eine Viskosität(Pa·s) liefert, $d_p$ eine durchschnittliche Korngröße (m) des Flussmittels liefert, Q eine Zirkulationsgeschwindigkeit (kg/s) der Stahlschmelze liefert, S eine Fläche ($m^2$) an einer Stalle der Oberfläche der Stahlschmelze in der Pfanne liefert und $d_i$ einen Durchmesser eines Tauchrohrs (4, 5) liefert.

## Revendications

**1.** Procédé de production d'acier à très faible teneur en carbone contenant du Ti présentant une concentration en carbone ne dépassant pas 0,003 % en masse, le procédé comprenant la coulée d'acier en fusion présentant une concentration en carbone de 0,02 à 0,06 % en masse dans une poche de coulée dans un état de non-désoxydation à partir d'un convertisseur, puis la soumission de l'acier en fusion à un traitement de décarburation sous vide dans un dégazeur sous vide RH pour réduire la concentration en carbone à pas plus de 0,003 % en masse, **caractérisé en ce que**,

dans un procédé d'affinage d'acier en fusion (1) à l'aide d'un dégazeur sous vide RH,
un traitement de désoxydation de l'acier en fusion est réalisé avec de l'Al après un traitement de décarburation sous vide,
après le traitement de désoxydation, un flux présentant un point de fusion supérieur à la température de l'acier en fusion est ajouté dans une cuve à vide (7) dans le dégazeur sous vide RH et ensuite une source de Ti est ajoutée.

2. Procédé selon la revendication 1, dans lequel,

après l'ajout de la quantité donnée du flux, un temps de circulation de l'acier en fusion $t_1$ après l'ajout de la source de Ti dans le dégazeur sous vide RH, et un temps de transport $t_2$ entre la fin du traitement RH et le début de l'injection de l'acier en fusion dans un entonnoir pour une coulée continue sont ajustés de façon à satisfaire l'équation (1) suivante :

$$190 \left( G \cdot \ln \left( P_0 / P \right) / W_M \right)^{1/3} \cdot t_1 + 11.8 \left( D^2 / W_f \right) \cdot t_2 \leq 1800 \quad \dots (1),$$

où $t_1$ est un temps de circulation (s) après l'ajout de la source de Ti dans le dégazeur sous vide RH, G est un débit ($Nm^3/s$) d'un gaz en circulation après l'ajout de la source de Ti dans le dégazeur sous vide RH, P est un degré de vide (Pa) dans la cuve (7) après l'ajout de la source de Ti dans le dégazeur sous vide RH, $P_0$ est une pression atmosphérique (101 325 Pa), $W_M$ est un poids (kg) de l'acier en fusion, $t_2$ est un temps de transport (s) entre la fin du traitement RH et le début de l'injection de l'acier en fusion dans l'entonnoir, D est un diamètre (m) de la surface de l'acier en fusion dans une poche de coulée (3), et $W_f$ est une quantité d'ajout (kg) du flux présentant un point de fusion supérieur à la température de l'acier en fusion

3. Procédé selon la revendication 2, dans lequel
le temps de circulation de l'acier en fusion $t_1$ et le temps de transport $t_2$ sont déterminés à l'avance, et la quantité d'ajout $W_f$ du flux est calculée de façon à satisfaire l'équation (1) et ajoutée.

4. Procédé selon l'une quelconque des revendications 1 à 3, dans lequel

un temps $t_3$ après l'ajout d'une quantité donnée du flux et jusqu'au début de l'ajout de la source de Ti satisfait les équations (A) à (C) suivantes :

$$t_3 > H / \left( u_p + U_u \right) \dots (A)$$

$$u_p = \left( 4 \cdot \left( \rho_p - \rho_M \right)^2 \cdot g^2 / \left( 225 \rho_M \cdot \mu_M \right) \right)^{1/3} \cdot d_p \dots (B)$$

$$U_u = Q / \rho_M / \left( S - \pi/4 \cdot d_i^2 \right) \quad \dots (C),$$

où $t_3$ est un temps de circulation (s) entre l'ajout du flux et l'ajout de la source de Ti dans le dégazeur sous vide RH, H est une profondeur (m) de l'acier en fusion dans la poche de coulée (3), $u_p$ est une vitesse finale (m/s) de grains de flux dans l'acier en fusion, $U_u$ est une vitesse moyenne de remontée (m/s) de l'acier en fusion dans la poche de coulée, $\rho_p$ est une densité de flux ($kg/m^3$), $\rho_M$ est une densité de l'acier en fusion ($kg/m^3$), g est une accélération de la pesanteur (9,8 $m/s^2$), $\mu_M$ est une viscosité (Pa $\cdot$ s) de l'acier en fusion, $d_p$ est une grosseur de grain moyenne (m) du flux, Q est un taux de circulation (kg/s) de l'acier en fusion, S est une superficie ($m^2$) à une position de la surface dans la poche de coulée, et $d_i$ est un diamètre (m) d'un tube plongeur (4, 5).

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0230711 A
- JP 2015183259 A
- JP 2001355018 A
- CN 102031453 A
- CN 102031452 B